# EUROPÄISCHE PATENTSCHRIFT

(11) **EP 2 074 888 B1**
(45) Veröffentlichungstag und Bekanntmachung des Hinweises auf die Patenterteilung: **16.02.2011**
(21) Anmeldenummer: 08171703.5
(22) Anmeldetag: 15.12.2008
(51) Int. Cl.: A23G 3/20, A23G 3/22

(54) **Überziehmaschine für Süßwarenstücke mit einer Bodenwallstation**
Coating machine for sweets with a bottom coating station
Machine de recouvrement pour produits de confiserie dotée d'une station d'enrobage au fond

(30) Priorität: 22.12.2007 DE 102007062468
(43) Veröffentlichungstag der Anmeldung: 01.07.2009
(73) Patentinhaber: Sollich KG, 32105 Bad Salzuflen (DE)
(72) Erfinder: Ellinghoven, Thomas, 32049, Herford (DE)
(74) Vertreter: Rehberg Hüppe + Partner

(56) Entgegenhaltungen:
- DE-A1- 3 504 174
- DE-C- 468 053
- DE-C1- 4 212 427
- GB-A- 227 595
- US-A- 1 818 911

## Beschreibung

### TECHNISCHES GEBIET DER ERFINDUNG

Die Erfindung betrifft eine Überziehmaschine für Süßwarenstücke mit einem in Arbeitsrichtung angetriebenen Gitterband für die Süßwarenstücke und mit einer Bodenwallstation. Die Erfindung betrifft weiterhin eine Bodenwallstation.

Die Überziehmaschine ist insbesondere zum Überziehen von Riegeln, Keksen und ähnlichen Süßwarenstücken mit Schokolademasse ausgebildet. Der Überzug kann auch aus einer anderen fetthaltigen Masse bestehen, auch aus Karamell oder Fondant. Der Überzug kann sich über die gesamte Oberfläche des Süßwarenstücks erstrecken oder nur einen Teil davon erfassen.

### NÄCHSTLIEGENDER STAND DER TECHNIK

Aus dem deutschen Patent DE 468 053 ist eine Überziehmaschine für Süßwarenstücke mit flüssigen Massen, insbesondere Schokolade, bekannt. Die Überziehmaschine weist ein in Arbeitsrichtung angetriebenes Gitterband und eine Bodenwallstation mit einem muldenartigen Kasten auf, der zur Aufnahme flüssiger Überzugsmasse dient. In den Kasten taucht eine angetriebene Tunkwalze ein, die die Aufgabe hat, die Überzugsmasse hoch zu fördern. Die Tunkwalze ist unterhalb des Gitterbands angeordnet. Es ist zunächst ein Vorabstreifer vorgesehen, der unter Spaltbildung relativ zur Oberfläche der Tunkwalze im Abstand angestellt wird und mit dem die Schichtdicke der Überzugsmasse auf der Tunkwalze eingestellt wird. Der Vorabstreifer streift auch überschüssige Masse ab, während er die für die Bildung des Bodenwalls dienende Masse auf der Oberfläche der Tunkwalze belässt. Ein ortsfest angeordnetes Element, welches die Funktionen eines Bodenwallträgers und eines Abnehmers für die von der Tunkwalze mitgeführte Masse erbringt, ist in ortsfester Anordnung zur Tunkwalze vorgesehen. Der Abnehmerteil dieses Elements nimmt die Masse für die Bildung eines Bodenwalls vom Umfang der Tunkwalze ab und auf und leitet diese in Richtung auf einen Spalt. Der Spalt wird zwischen dem Abnehmerteil des ortsfesten Elements und einen zweiten einstellbaren Blech gebildet. Der Abnehmerteil und das Blech bilden im Spalt einen Düsenquerschnitt, durch den die abgenommene Masse hindurchgedrückt wird, wobei sie gleichzeitig von unten durch das Gitterband hindurch tritt. Auf diese Weise entsteht eine Bodenwelle. Durch die Einstellung des Blechs der Düse wird die Stauschichthöhe des gebildeten Bodenwalls auf dem Bodenwallträger beeinflusst. Es kann zusätzlich ein Förderband vorgesehen sein, dessen Umlaufgeschwindigkeit regelbar ist, um eine Feineinstellung der Stauschichthöhe der Bodenwelle auf dem Teil des Elements zu ermöglichen, das die Funktion des Bodenwallträgers erbringt. Ein Wallformer als separates Element, der also relativ zum Abnehmer austausch- und/oder einstellbar angeordnet wäre und mit dem die Form der Bodenwelle hinsichtlich ihres Querschnittsprofils in Arbeitsrichtung beeinflusst werden könnte, ist nicht vorgesehen.

Aus dem deutschen Patent DE 42 12 427 C1 ist eine Überziehmaschine bzw. eine Bodenüberziehstation für Süßwarenstücke mit einem in Arbeitsrichtung angetriebenen Gitterband für die Süßwarenstücke bekannt. Eine Bodenwallstation weist einen muldenartigen Kasten zur Aufnahme flüssiger Überzugsmasse, insbesondere Schokolade, auf. Mit einer Pumpe wird flüssige Überzugsmasse in den Kasten gefördert und dort z. B. mit einem Überlauf in Form langlochartiger Schlitze in einer Seitenwandung des Kastens ein etwa konstanter Spiegel an Überzugsmasse eingestellt. Als Förderorgan für die Überzugsmasse aus dem Kasten nach oben dient eine angetriebene Tunkwalze, die unterhalb des Gitterbands angeordnet ist und unter den Spiegel der Überzugsmasse in den Kasten einragt. Es ist ein am Umfang der Tunkwalze unter Schleifkontakt angestellter Abnehmer für die von der Tunkwalze aus dem Kasten geförderte Überzugsmasse vorgesehen, der also als Schaber wirkt und im Wesentlichen sämtliche Überzugsmasse zur Bildung eines Bodenwalls an der angestellten Stelle von der Oberfläche der Tunkwalze abnimmt. Die Tunkwalze ist mit Abstand unterhalb des Gitterbands angeordnet. Die Tunkwalze wird gegensinnig zur Arbeitsrichtung des Gitterbands angetrieben. Der Abnehmer befindet sich stromab der Tunkwalze, also dort, wo sich die Oberfläche der Tunkwalze bereits wieder abwärts bewegt. Der Abnehmer ist in Führungen gelagert, um die Schwerkrafteinwirkung für den Schleifkontakt zu nutzen. Zusätzlich können Federn vorgesehen sein, um die Anstellkraft zu erhöhen. Die Führungen dienen auch dazu, den Abnehmer leicht abnehmen und reinigen zu können. Die Schichtdicke der Bodenwelle, die im Wesentlichen bestimmend für die Überzugshöhe an den Seitenwandungen des Süßwarenstücks ist, wird durch eine Variation der Drehzahl des Antriebs der Tunkwalze gesteuert. Der Abnehmer kann einen keilförmigen Querschnitt aufweisen. Es bildet sich ein Bodenwall aus, wobei die Überzugsmasse durch die Nähe und die Stauwirkung an dem Abnehmer von dem Umfang der Tunkwalze von unten durch das Gitterband nach oben hindurchgedrückt wird. Der Abnehmer kann auch einen rechteckigen Querschnitt besitzen, so dass der Bodenwall an der Entstehungsstelle eine etwas andere Form bekommt. Die Durchdrückwirkung für die mitgenommene Überzugsmasse an der Entstehungsstelle ist hier verstärkt. Die Beeinflussung der Form des Bodenwalls ist damit im Wesentlichen auf die Entstehungsstelle am Abnehmer beschränkt, also auf einen Teil des Bodenwalls, der sich noch unterhalb des Gitterbands befindet. Die Höhe der Bodenwelle, also des Teils des Bodenwalls, der sich oberhalb des Gitterbands befindet, wird durch die Variation des Querschnitts des Abnehmers nicht nennenswert beeinflusst. Die Höhe der Bodenwelle ist im Wesentlichen von der Drehzahl und damit von der Oberflächengeschwindigkeit der Tunkwalze abhängig. Die Länge der Bodenwelle wird durch einen Bodenwallträger beeinflusst, der unterhalb des Gitterbandes angeordnet ist und der einstellbar und/oder längenveränderlich ausgebildet sein kann.

### AUFGABE DER ERFINDUNG

Der Erfindung liegt die Aufgabe zugrunde, eine Überziehmaschine mit Bodenwallstation sowie eine Bodenwallstation bereitzustellen, mit denen das Querschnittsprofil der Bodenwelle in Arbeitsrichtung besser und genauer beeinflusst werden kann.

### LÖSUNG

Die Aufgabe der Erfindung wird erfindungsgemäß mit den Merkmalen der unabhängigen Patentansprüche 1 bzw. 13 gelöst.

### WEITERER STAND DER TECHNIK

Aus dem deutschen Patent DE 35 04 174 C2 ist eine Einrichtung zur Regulierung des Bodenwalls an Überziehanlagen bekannt, bei der der Bodenwall durch eine unterhalb des Gitterbands angeordnete Förderwalze in Verbindung mit einem im Abstand zu dem Umfang der Förderwalze unter Spaltbildung angestellten Element, also einem Abstreifer, zur Begrenzung der Schichtdicke der von der Förderwalze mitgenommenen Masse gebildet wird. Der Abstreifer streift überschüssige Masse ab, also Masse, die zur Bildung des Bodenwalls nicht eingesetzt wird. Ein gegen den Umfang der Förderwalze angestellter Abnehmer, der die von der Förderwalze hoch geförderte Überzugsmasse zur Bildung des Bodenwalls abnehmen würde, ist nicht vorgesehen. Zur Einstellung der Fördermenge zur Bildung des Bodenwalls sind die Funktionselemente hinsichtlich ihrer Lage zur Förderwelle einstellbar. Mit diesen Funktionselementen wird die Fördermenge und damit die Stärke des Bodenwalls auf dem Bodenwallblech eingestellt. Weiterhin ist ein Bodenwallblech vorgesehen, welches die Funktion eines Bodenwallträgers erbringt, also den Bodenwall von unten abstützt und damit das Durchfallen des Bodenwalls durch das Gitterband an der Anordnungsstelle des Bodenwallblechs verhindert. Je nach der eingestellten Fördermenge variiert die Stärke des Bodenwalls auf dem Bodenwallblech.

Es ist im **Stand der Technik** weiterhin bekannt, einen Vorabstreifer auf der Seite der Tunkwalze anzuordnen, die sich bei ihrem rotierenden Antrieb aufwärts bewegt. Ein solcher Vorabstreifer wird jedoch im Gegensatz zu einem Abnehmer nicht gegen die Oberfläche der Tunkwalze angestellt, sondern er endet mit Abstand hierzu und bildet insoweit bzw. begrenzt einen Durchtrittsspalt für die von der Tunkwalze aufwärts mitgenommene Überzugsmasse.

### BESCHREIBUNG DER ERFINDUNG

Nach Erkenntnissen der Anmelderin kommt es für ein gutes Überziehergebnis an dem Süßwarenstück nicht nur auf die Höhe und Länge der Bodenwelle an. Entscheidend kann vielmehr das Profil der Bodenwelle in Arbeitsrichtung sein, wie es sich bei einem Vertikalschnitt in Arbeitsrichtung ausbildet bzw. darstellt. Dabei kann an diesem Profil ein Anstieg der Bodenwelle von einem mehr oder weniger gleich hoch verbleibenden Mittelteil und einem Abstieg der Bodenwelle unterschieden werden. Unter dem Anstieg der Bodenwelle wird der Teil bzw. Verlauf der Bodenwelle verstanden, der an der Durchtrittsstelle der Überzugsmasse am Gitterband beginnt und sich so weit in Arbeitsrichtung erstreckt, bis die maximale Höhe der Bodenwelle erreicht ist. Es können hier mehr oder weniger flache bzw. steile Anstiege unterschieden werden, die im Übrigen auf die maximale Höhe der Bodenwelle abgestimmt sein können, also insbesondere abhängig von der pro Zeiteinheit gelieferten Menge an Überzugsmasse, im Wesentlichen abhängig von der Drehzahl der Tunkwalze.

Im Rahmen der vorliegenden Erfindung geht es um einen Bodenüberzug mit einer Bodenwelle aus Überzugsmasse, die von unten nach oben durch das in bekannter Weise durchbrochene Gitterband aufwärts hindurchgedrückt wird und den Boden und Bereiche der Seitenwandungen des Süßwarenstücks erfasst. Die Erfindung kann an einer separaten Bodenwallstation oder an einer Bodenwallstation in einer Überziehmaschine mit einem Einfach- oder einem Doppelschleier oder z. B. auch an einer Dekoriermaschine eingesetzt werden.

Die Erfindung macht auch von einem Abnehmer Gebrauch, der am Umfang der Tunkwalze unter Schleifkontakt angestellt ist und die von der Tunkwalze aus dem Kasten geförderte Überzugsmasse zur Bildung eines Bodenwalls abnimmt und aufstaut. Ein solcher Abnehmer ist von einem Vorabstreifer zu unterscheiden, der mit Abstand zu der Oberfläche der Tunkwalze endet und insoweit einen Durchtrittsspalt für die von der Tunkwalze aufwärts mitgenommene Überzugsmasse bildet. Ein solcher Vorabstreifer begrenzt die Menge der von der Tunkwalze am Abnehmer zur Verfügung gestellten Überzugsmasse.

Dem Abnehmer wird als separates Element ein Wallformer zugeordnet, der die vom Abnehmer von der Tunkwalze abgenommene Überzugsmasse umleitet und umformt, so dass aus einem Teil des Bodenwalls nach dessen Durchtritt durch das Gitterband eine Bodenwelle entsteht. Der Wallformer ist in der Nähe des Abnehmers oberhalb desselben und somit zwischen Abnehmer und Unterseite des Gitterbands angeordnet. Der Wallformer besitzt eine Formoberfläche, die so ausgebildet ist, dass er die Form des Querschnittsprofils der Bodenwelle in wesentlichen Bereichen, insbesondere hinsichtlich eines Anstiegs der Bodenwelle, nachhaltig beeinflusst. Dieser Wallformer ist austauschbar und/oder einstellbar angeordnet, und zwar relativ zum Abnehmer, während der Abnehmer in Betriebsstellung ortsfest gegen den Umfang der Tunkwalze angestellt ist. Der Wallformer kann also jederzeit relativ zum Abnehmer ver- und damit eingestellt werden. Es ist auch denkbar, mehrere Wallformer mit unterschiedlichen Formflächen vorzusehen und diese austauschbar zu gestalten, so dass für den speziellen Anwendungsfall ein gewünschtes Querschnittsprofil der Bodenwelle in Arbeitsrichtung reproduzierbar einstellbar ist. Der Wallformer ist auch der Tunkwalze zugeordnet, d. h. der Verlauf des Querschnittsprofils der Bodenwelle in Arbeitsrichtung wird einerseits von der Drehzahl und dem Durchmesser der Tunkwalze in Kombination mit der jeweiligen Einstellung des Wallformers erzielt.

Mit dem neuen Wallformer ist es möglich, z. B. ein langes flaches, also wenig hohes Querschnittsprofil der Bodenwelle zu erzeugen, um auf diese Art und Weise eine relativ lange Kontaktzeit der Süßwarenstücke mit der Bodenwelle sicherzustellen. Damit ist es insbesondere möglich, selbst bei Süßwarenstücken mit offenporigem bzw. zerklüftetem Boden einen geschlossenen überzogenen Boden auszubilden, der im Übrigen weitgehend blasenfrei ist, weil der Wallformer keinen Ausgangspunkt für das Entstehen von Blasen bildet. Andererseits ist es aber auch möglich, beispielsweise beim Maskieren höherer Süßwarenprodukte, einen sehr hohen Bodenwall mit einem flach ansteigenden Anstieg im Querschnittsprofil der Bodenwelle zu erzeugen. Ein langer flach geneigter Anstieg bzw. ein kurzer steiler Anstieg können jeweils unabhängig von der maximalen Höhe der Bodenwelle gewählt und eingestellt werden. Damit ergibt sich eine erhebliche Qualitätssteigerung hinsichtlich des Bodenüberzugs der Süßwarenstücke.

Der Wallformer weist zur Beeinflussung des Querschnittsprofils der Bodenwelle eine mit der von der Tunkwalze geförderten und vom Abnehmer abgenommenen Überzugsmasse in Kontakt kommende Formoberfläche auf. Die Formoberfläche kann so gestaltet sein, dass mit ihr, insbesondere in Abstimmung auf die Drehzahl und den Durchmesser der Tunkwalze, das gesamte Querschnittsprofil der sich durch das Gitterband erstreckenden Bodenwelle aus Überzugsmasse in einen Vertikalschnitt in Arbeitsrichtung bestimmt oder zumindest der Anstieg dieser Bodenwelle festgelegt wird. Es versteht sich, dass sich die Beeinflussung des Querschnittsprofils der Bodenwelle durch den Wallformer in erster Linie auf den Anstieg der Bodenwelle bezieht. Hinsichtlich der Länge der Bodenwelle kann zusätzlich ein Bodenwallträger, wie er im Stand der Technik bekannt ist, zur Einwirkung gebracht werden. Das Zusammenspiel dieser drei Elemente bestimmt damit den gesamten Verlauf des Querschnittsprofils der Bodenwelle von Anfang bis Ende. Dem Wallformer kann zusätzlich auch ein Vorabstreifer zugeordnet sein, der die Menge der von der Tunkwalze hochgeförderten Überzugsmasse durch Spalteinstellung begrenzt und so auch zumindest indirekt die Ausbildung des Querschnittsprofils der Bodenwelle beeinflusst. Die Erfindung kann unabhängig davon Anwendung finden, ob die Tunkwalze gleichsinnig oder gegensinnig zu der Arbeitsrichtung des Gitterbands angetrieben wird. Die Tunkwalze selbst kann auch höhenver- und -einstellbar angeordnet sein, um auf diese Weise den Abstand zu der Unterseite des Gitterbands zu variieren.

Für die Ausbildung der Formoberfläche des Wallformers eignen sich alle sinnvollen Formgebungen, sei es in geneigter, geknickter oder gekrümmter Form. Die Formoberfläche kann insbesondere auch pflugscharartig ausgebildet sein.

Die Ver- und Einstellung des Wallformers bzw. dessen Formoberfläche relativ zum Abnehmer und zu der Oberfläche der Tunkwalze kann translatorisch und/oder rotatorisch ausgebildet sein. In beiden Fällen wirkt sich dies auf das Querschnittsprofil der Bodenwelle aus. In Anpassung dazu kann auch der Abnehmer rotatorisch verschwenkbar angeordnet sein, so dass er um die Achse seines freien, den Schleifkontakt zur Tunkwalze sicherstellenden freien Endes schwenkbar ist.

Der Wallformer ist oberhalb des Abnehmers und unterhalb des Gitterbands angeordnet. Er befindet sich nahe am Abnehmer, wobei eine Spaltbildung zum Abnehmer zweckmäßig zu vermeiden ist, damit an dieser Stelle keine Überzugsmasse hindurchtreten kann und sämtliche von der Tunkwalze geförderte Überzugsmasse dem Bodenwall zugute kommt.

Der Wallformer kann gleichzeitig eine Abstützfläche für das Gitterband aufweisen bzw. bilden, um so genau die Durchtrittsstelle der Überzugsmasse durch das Gitterband nach oben und insoweit den Beginn des Anstiegs der Bodenwelle festzulegen. Der Wallformer wirkt damit auch einem Umschlagen des Bodenwalls beim Durchtritt der Überzugsmasse durch das Gitterband nach oben entgegen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine Seitenansicht einer ersten beispielhaften Ausführungsform der neuen Bodenwallstation.
- **Fig. 2**: ist eine Querschnittsansicht einer zweiten beispielhaften Ausführungsform der neuen Bodenwallstation mit einer Darstellung des Querschnittsprofils der Boden- welle mit einem kurzen hohen Anstieg.
- **Fig. 3**: ist eine weitere Querschnittsansicht der zweiten beispielhaften Ausführungsform der neuen Bodenwallstation mit einer Darstellung des Querschnittsprofils der Bodenwelle mit einem flachen langgezogenen Anstieg.
- **Fig.4**: ist eine weitere Querschnittsansicht der zweiten beispielhaften Ausführungsform der neuen Bodenwallstation und verdeutlicht die Ausbildung des Querschnitts- profils der Bodenwelle mit einem steilen Anstieg in Arbeitsrichtung bei hoher Drehzahl der Tunkwalze.
- **Fig. 5**: ist eine weitere Querschnittsansicht der zweiten beispielhaften Ausführungsform der neuen Bodenwallstation und verdeutlicht die Ausbildung des Querschnitts- profils der Bodenwelle mit einem flachen Anstieg in Arbeitsrichtung bei hoher Drehzahl der Tunkwalze.
- **Fig. 6**: ist eine weitere Querschnittsansicht der zweiten beispielhaften Ausführungsform der neuen Bodenwallstation und verdeutlicht die Ausbildung des Querschnitts- profils der Bodenwelle mit einem steilen Anstieg in Arbeitsrichtung bei vergleichs- weise geringer Drehzahl der Tunkwalze.
- **Fig. 7**: ist eine weitere Querschnittsansicht der zweiten beispielhaften Ausführungsform der neuen Bodenwallstation und verdeutlicht die Ausbildung des Querschnitts- profils der Bodenwelle mit einem flachen Anstieg in Arbeitsrichtung bei ver- gleichsweise geringer Drehzahl der Tunkwalze.

### FIGURENBESCHREIBUNG

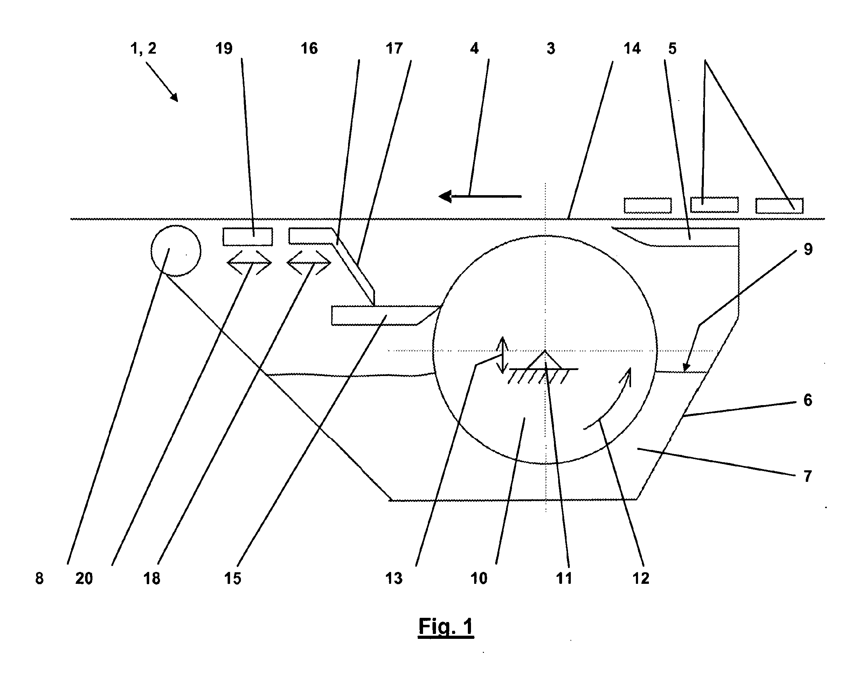

**Fig. 1** zeigt eine erste beispielhafte Ausführungsform der neuen Überziehmaschine 1 und der neuen Bodenwallstation 2. Ein Gitterband 3 wird in einer durch einen Pfeil gekennzeichneten Arbeitsrichtung 4 in bekannter Weise endlos umlaufend angetrieben. Auf dem Gitterband 3 liegen Süßwarenstücke 5 auf, die vorzugsweise in Reihen nebeneinander und hintereinander angeordnet sind und jeweils im Abstand zueinander geführt werden. Unterhalb des Gitterbands 3 ist ein muldenförmiger Kasten 6 vorgesehen, von dem nur einige Wandbestandteile dargestellt sind. Es versteht sich, dass in diesem Kasten 6 eine Überzugsmasse 7 vorgesehen ist bzw. durch eine nicht dargestellte Speisepumpe fortlaufend nachgespeist wird. Der Kasten 6 kann ein Speiserohr 8 aufweisen, durch das die Überzugsmasse 7 nachgespeist wird. Das Speiserohr 8 kann an eine hintere Querwand des Kastens 6 angebracht sein. Das Speiserohr 8 besitzt einen oder mehrere Durchbrechungen, über die von der nicht dargestellten Pumpe geförderte Überzugsmasse 7 in flüssiger Form in den muldenartigen Kasten 6 eingebracht wird.
Die Umwälzung und Ergänzung der Überzugsmasse 7 wird so gesteuert, dass sich ein Massespiegel 9 etwa auf konstantem Niveau einstellt.

In Zuordnung zu dem Kasten 6 bzw. dem Massespiegel 9 ist eine Tunkwalze 10 in einem Lager 11 drehbar gelagert und mit einem Antrieb versehen. Die Tunkwalze 10 wird in Richtung eines Pfeils 12 angetrieben, so dass sich ihre obere Oberfläche gleichsinnig zu der Arbeitsrichtung 4 des Gitterbands 3 bewegt. Die Tunkwalze 10 kann in dem Lager 11 gemäß Pfeil 13 höhenverstellbar angeordnet sein, um den Abstand zu der Unterseite des Gitterbands 3 einstellen zu können.

Der Tunkwalze 10 kann ein Vorabstreifer 14 zugeordnet sein, der unter Spaltbildung in entsprechendem Abstand zu der Oberfläche der Tunkwalze 10 angeordnet ist. Der Spalt kann in seiner Spaltweite veränderbar sein durch entsprechende Verstellung des Vorabstreifers 14, abgestimmt auf die Höhenposition der Tunkwalze 10. Durch diese Spaltbildung wird die Menge der Überzugsmasse 7, die von der Tunkwalze 10 nach oben gefördert wird, begrenzt und über die Arbeitsbreite vergleichmäßigt. Der Vorabstreifer 14 kann jedoch auch entfallen.

Ein Abnehmer 15 ist auf der anderen Seite der Tunkwalze 10 in einem Bereich angeordnet, an dem sich die Oberfläche der Tunkwalze 10 bereits wieder nach unten bewegt. Der Abnehmer 15 ist unter Schleifkontakt an der Oberfläche der Tunkwalze 10 angestellt und dient so dazu, mehr oder weniger die gesamte von der Tunkwalze 10 hochgeförderte Überzugsmasse 7 abzunehmen. Die Überzugsmasse 7 ist in Fig. 1 in der Ruhestellung der Überzugsmaschine 1 bzw. ohne Darstellung der Bodenwelle vorgenommen, um zunächst einmal die Relation der wesentlichen Elemente zu verdeutlichen. Der Abnehmer 15 kann horizontal ausgerichtet, wie dargestellt, in nicht verdeutlichten Führungen gegen die Oberfläche der Tunkwalze 10 angestellt sein. Der Abnehmer 15 kann messerartig ausgebildet sein, um eine linienförmige Abnahmestelle zu bilden.

Ein Wallformer 16 ist vorgesehen, der in der Nähe des Abnehmers 15 und in Relation dazu unterhalb der Unterseite des Gitterbands 3 angeordnet ist. Der Wallformer 16 besitzt hier eine gerade und geneigt verlaufende Formoberfläche 17. Der Wallformer 16 ist in Richtung des Doppelpfeils 18 longitudinal einstellbar angeordnet, und zwar relativ zu dem stillstehend ortsfest angeordneten Abnehmer 15. Der Abnehmer 15 nimmt die Überzugsmasse 7, die von der Tunkwalze 10 gefördert wird, ab und staut diese zunächst einmal auf. Der Wallformer 16 formt bzw. leitet diese Überzugsmasse 7 in einer gewünschten Weise um, wobei dann eine Bodenwelle entsteht (in Fig. 1 nicht dargestellt). Als Bodenwelle wird der Teil des Bodenwalls bezeichnet, der durch das Gitterband 3 nach oben hindurchgetreten ist und sich dort ausgebildet hat.

In Arbeitsrichtung 4 dem Wallformer 16 nachgeordnet kann ein Bodenwallträger 19 vorgesehen sein, der entsprechend dem Doppelpfeil 20 ver- und einstellbar angeordnet ist. Der Bodenwalltrager 19 kann auch in seiner Länge veränderlich ausgebildet sein.

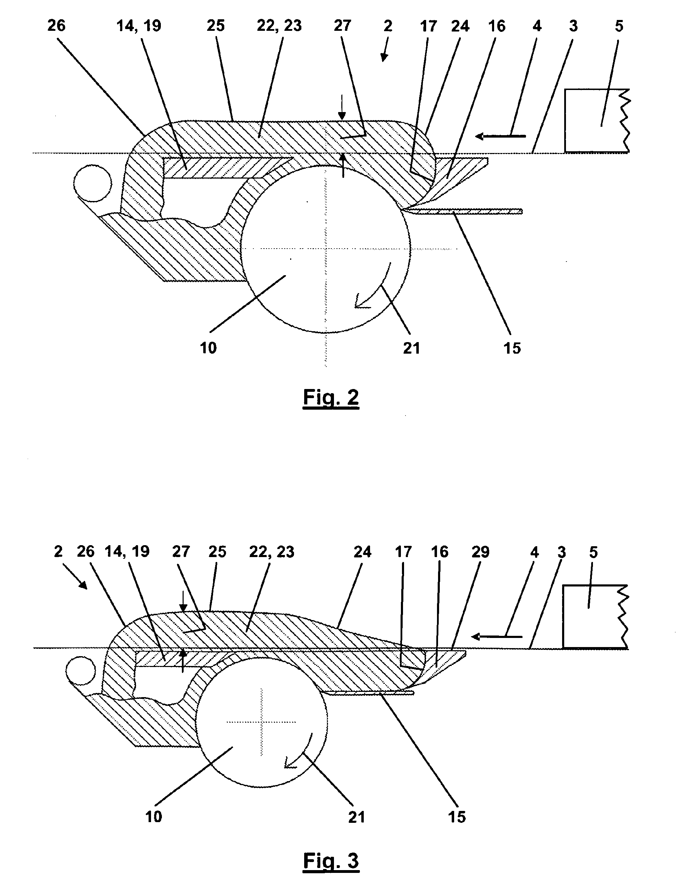

In den **Fig. 2 und 3** ist eine weitere beispielhafte Ausführungsform der Bodenwallstation 2 dargestellt. Die Tunkwalze 10 wird hier gemäß Pfeil 21 gegensinnig zu der Arbeitsrichtung 4 des Gitterbands 3 angetrieben. Der Tunkwalze 10 kann ein Vorabstreifer 14 und auch ein Bodenwallträger 19 zugeordnet sein. Diese beiden Elemente sind hier einstückig dargestellt, so dass letztendlich das der Tunkwalze 10 zugekehrte Ende des Bodenwallträgers 19 zugleich die Kante für die Spaltbildung des Vorabstreifers 14 darstellt.

Durch Vergleich der Fig. 2 und 3 ist leicht erkennbar, dass der Abnehmer 15 jeweils an gleicher Stelle ortsfest angeordnet ist, dagegen der Wallformer 16 mit seiner Formoberfläche 17 in einer Ebene parallel zur Ebene des Gitterbands 3 einstellbar angeordnet ist, so dass der Wallformer 16 in seinem Abstand zu der Oberfläche der Tunkwalze 10 veränderbar ein- und feststellbar ausgebildet ist.

In den Fig. 2 und 3 ist nun auch eine Bodenwelle 22 dargestellt. Mit dieser Bodenwelle 22 wird der Teil der Überzugsmasse 7 bezeichnet, der durch das Gitterband 3 nach oben hindurchgetreten ist und sich oberhalb der Oberfläche des Gitterbands 3 befindet. Die Süßwarenstücke 5 kommen also mit dieser Bodenwelle 22 unmittelbar in Kontakt, wenn sie auf dem Gitterband 3 aufliegend durch diese Bodenwelle 22 geführt werden.

Der Vergleich der Fig. 2 und 3 verdeutlicht auch die grundsätzlich unterschiedliche Ausbildung eines Querschnittsprofils 23, welches die Bodenwelle 22 in einem Vertikalschnitt durch die Arbeitsrichtung 4 einnimmt. Es wird hier ein Anstieg 24 von einem Mittelbereich 25 und einem Abfall 26 am Ende des Bodenwallträgers 19 unterschieden. Der Anstieg 24 kann, wie Fig. 2 verdeutlicht, relativ steil auf kurzer Längserstreckung stattfinden. Diese Wirkung ergibt sich, wenn der Wallformer 16 mit seiner Formoberfläche 17 relativ nahe an der Oberfläche der Tunkwalze 10 eingestellt ist. Ein vergleichsweise langer Anstieg 24, der gestreckt und flacher geneigt verläuft, ergibt sich dann, wenn der Wallformer 16, wie in Fig. 3 dargestellt, einen relativ großen Abstand von der Oberfläche der Tunkwalze 10 aufweist, also relativ weit entgegen der Arbeitsrichtung 4 eingestellt ist. In den jeweiligen Mittelbereichen 25 ergibt sich eine maximale Höhe 27 der Bodenwelle 22. Die maximale Höhe 27 der Bodenwelle 22 ist in großem Maße von der Drehzahl der Tunkwalze 10 abhängig, auch von der Einstellung eines Vorabstreifers 14 sowie der Ausbildung des Anstiegs 24. Die maximale Höhe 27 kann in Arbeitsrichtung 4 gesehen früher oder später am Querschnittsprofil 23 der Bodenwelle 22 auftreten. Durch die Anordnung eines Bodenwallträgers 19 kann nun der Mittelbereich 25 der Bodenwelle 22 in Arbeitsrichtung 4 verlängert bzw. verkürzt werden, um damit, abgestimmt auf die Einstellung des Wallformers 16, auch die Länge des Querschnittsprofils 23 zu beeinflussen. Die maximale Höhe 27 wird durch das hier nur angedeutete Ende des Bodenwallträgers 19 bestimmt.

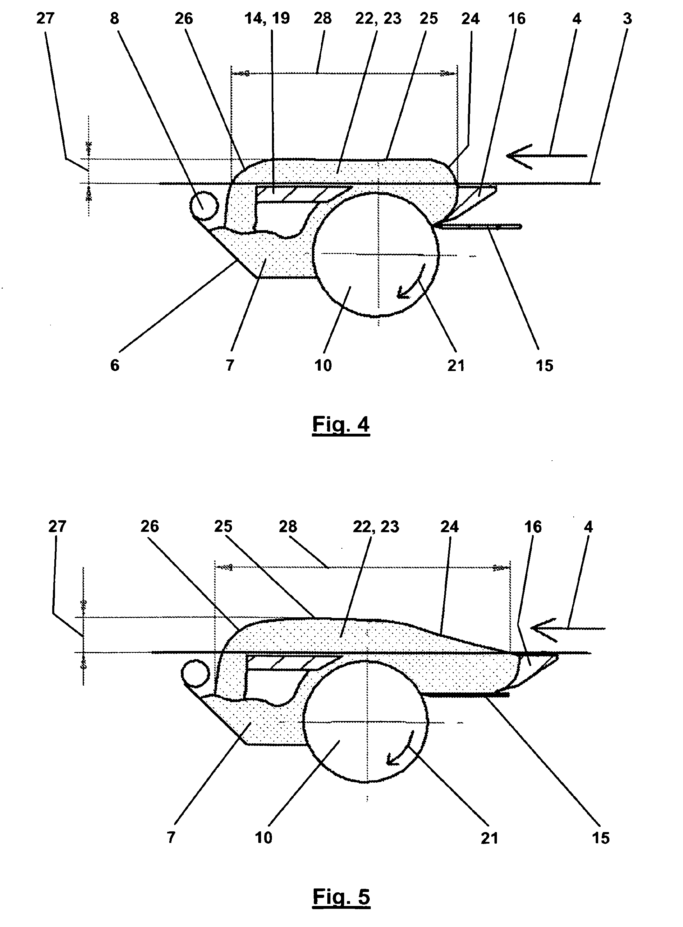

In den **Fig.4 bis 7** ist auch die Länge 28 des Querschnittsprofils 23 der Bodenwelle 22 dargestellt. Man erkennt durch Vergleich der Fig. 4 bis 7 deutlich, wie das Querschnittsprofil 23 der Bodenwelle 22, die letztendlich für das Arbeitsergebnis, nämlich die Anbringung des Überzugs am Boden und an Seitenwandungen des Süßwarenstücks 5 verantwortlich ist, verändert werden kann. Das Querschnittsprofil 23 kann in der gezeigten Weise hinsichtlich seines Anstiegs 24, seines Mittelbereichs 25 mit der maximalen Höhe 27 und letztlich auch noch etwas hinsichtlich des Abfalls 26 beeinflusst werden.

**Fig. 4** zeigt eine Ausbildung des Querschnittsprofils 23 der Bodenwelle 22 in der Kombination der Anordnung des Wallformers 16 für einen steilen Anstieg 24 bei relativ hoher Drehzahl der Tunkwalze 10, also relativ großer Menge an hochgeförderter Überzugsmasse 7.

**Fig. 5** zeigt eine Stellung des Wallformers 16 zur Erzielung eines möglichst langsamen, d. h. flach ansteigenden Anstiegs 24 des Querschnittsprofils 23 der Bodenwelle 22 mit Erreichung einer auch veränderten, d. h. gegenüber Fig. 4 noch vergrößerten, maximalen Höhe 27 im Mittelbereich 25 des Querschnittsprofils 23. Zu einer solchen Einstellung und zur Erzielung eines solchen Querschnittsprofils 23 gehört eine relativ hohe Drehzahl der Tunkwalze 10.

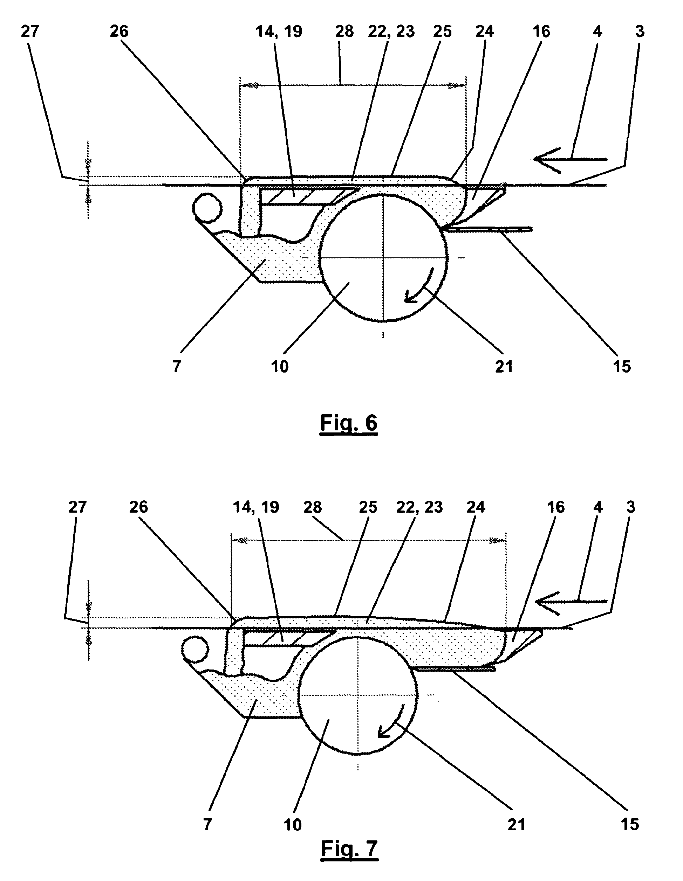

Die **Fig. 6 und 7** zeigen Querschnittsprofile 23 der Bodenwelle 22 bei vergleichsweise geringer Drehzahl der Tunkwalze 10, also bei einer vergleichsweise kleineren hochgeförderten Menge an Überzugsmasse 7. In den Fig. 6 und 7 ist der Wallformer 16 auf kurzem Abstand zur Oberfläche des Abnehmers 15 relativ nahe an der Oberfläche der Tunkwalze 10 angestellt, so dass sich ein steiler Anstieg 24 des Querschnittsprofils 23 ergibt. Fig. 7 zeigt die Relativlage zur Erzielung eines langsam und mit geringer Neigung verlaufenden Anstiegs 24.

Obwohl in den Zeichnungen nur translatorisch parallel zur Ebene des Gitterbands 3 einstellbare Wallformer 16 dargestellt sind, versteht es sich, dass auch oder zusätzlich zu einer translatorischen auch eine rotatorische Einstellmöglichkeit der Wallformer 16 genutzt werden kann, um die Formoberfläche 17 in eine andere Relativlage zu bewegen und damit insbesondere auf den Anstieg 24 des Querschnittsprofils 23 der Bodenwelle 22 Einfluss zu nehmen. Es ist auch möglich, mehrere Wallformer 16 mit unterschiedlich geformten Formoberflächen 17 vorzusehen, um solche Wallformer 16 austauschbar bzw. auswechselbar zu gestalten und so eine genauere Anpassung des Querschnittsprofils 23 an die jeweilige Art von Süßwarenstücken 5 zu erzielen. Dies gilt insbesondere für eine Maskierung solcher Süßwarenstücke 5, bei der die Überzugsmasse 7 nur den Boden und einen Teil der Seitenwände des Süßwarenstücks 5 erreichen soll. Dabei kommt es insbesondere darauf an, dass die obere Kante des Überzugs im Bereich der Seitenwände der Süßwarenstücke 5 in gleicher Höhe verläuft, also letztlich keinen Abfall nach der einen oder anderen Richtung zeigt. Diese gewünschte Wirkung kann ebenfalls durch die Einstellung des Wallformers 16 erzielt bzw. begünstigt werden. Die Länge 28 des Querschnittsprofils 23 bestimmt im Wesentlichen die Verweilzeit bzw. die Kontaktzeit zwischen Bodenwelle 22 und Süßwarenstück 5. Dies ist für die Erzielung eines geschlossenen blasenfreien überzogenen Bodens des Süßwarenstücks 5 bedeutsam. Der Wallformer 16 kann auch eine Abstützfläche 29 (Fig. 3) für die Unterseite des Gitterbands 3 bilden, auf dem das Gitterband 3 aufruht bzw. mit der es abgestützt wird, so dass damit reproduzierbar der Beginn des Anstiegs 24 und seiner Ausbildung am Gitterband 3 festgelegt sind.

### BEZUGSZEICHENLISTE

- 1: Überziehmaschine
- 2: Bodenwallstation
- 3: Gitterband
- 4: Arbeitsrichtung
- 5: Süßwarenstück
- 6: Kasten
- 7: Überzugsmasse
- 8: Speiserohr
- 9: Massespiegel
- 10: Tunkwalze
- 11: Lager
- 12: Pfeil
- 13: Pfeil
- 14: Vorabstreifer
- 15: Abnehmer
- 16: Wallformer
- 17: Formoberfläche
- 18: Doppelpfeil
- 19: Bodenwallträger
- 20: Doppelpfeil
- 21: Pfeil
- 22: Bodenwelle
- 23: Querschnittsprofil
- 24: Anstieg
- 25: Mittelbereich
- 26: Abfall
- 27: maximale Höhe
- 28: Länge
- 29: Abstützfläche

## Patentansprüche

1. Überziehmaschine (1) für Süßwarenstücke (5), mit
einem in Arbeitsrichtung (4) angetriebenen Gitterband (3) für die Süßwarenstücke (5); und
einer Bodenwallstation (2), mit
einem muldenartigen Kasten (6) zur Aufnahme flüssiger Überzugsmasse (7), insbesondere Schokolade,
einer als Förderorgan für die Überzugsmasse (7) dienenden angetriebenen Tunkwalze (10), die unterhalb des Gitterbands (3) angeordnet ist, und
einem am Umfang der Tunkwalze (10) unter Schleifkontakt angestellten Abnehmer (15) zur Abnahme der von der Tunkwalze (10) aus dem Kasten (6) geförderten Überzugsmasse (7) zur Bildung eines Bodenwalls, **dadurch gekennzeichnet, dass**
unterhalb des Gitterbands (3) ein zum Abnehmer (15) separater Wallformer (16) angeordnet ist, der die vom Abnehmer (15) von der Tunkwalze (10) abgenommene Überzugsmasse (7) umleitet und umformt, so dass aus einem Teil des Bodenwalls nach dessen Durchtritt durch das Gitterband (3) eine Bodenwelle (22) entsteht,
der Wallformer (16) zur Beeinflussung des Querschnittsprofils (23) der Bodenwelle (22) eine mit der abgenommenen Überzugsmasse (7) in Kontakt kommende Formoberfläche (17) aufweist, und
der Wallformer (16) zur Beeinflussung des Querschnittsprofils (23) der Bodenwelle (22) relativ zum Abnehmer (15) austausch- und/oder einstellbar angeordnet ist.

2. Überziehmaschine (1) nach Anspruch 1, **dadurch gekennzeichnet, dass** die Formoberfläche (17) des Wallformers (16) so gestaltet ist, dass mit ihr das gesamte Querschnittsprofil (23) der sich durch das Gitterband (3) erstreckenden Bodenwelle (22) des Bodenwalls aus Überzugsmasse (7) in einem Vertikalschnitt in Arbeitsrichtung (4) bestimmt oder zumindest der Anstieg (24) dieser Bodenwelle (22) festgelegt wird.

3. Überziehmaschine (1) nach Anspruch 1 oder 2, **dadurch gekennzeichnet, dass** die Formoberfläche (17) in Abstimmung auf die Drehzahl und den Durchmesser der Tunkwalze (10) gestaltet ist.

4. Überziehmaschine (1) nach mindestens einem der Ansprüche 1 bis 3, **dadurch gekennzeichnet, dass** die Formoberfläche (17) des Wallformers (16) geneigt, geknickt oder gekrümmt ausgebildet ist.

5. Überziehmaschine (1) mindestens einem der Ansprüche 1 bis 4, **dadurch gekennzeichnet, dass** der Wallformer (16) parallel zur Ebene des Gitterbands (3) in Arbeitsrichtung (4) translatorisch einstellbar angeordnet ist.

6. Überziehmaschine (1) nach mindestens einem der Ansprüche 1 bis 5, **dadurch gekennzeichnet, dass** der Wallformer (16) um eine sich quer zur Arbeitsrichtung (4) erstreckende Drehachse rotatorisch verschwenkbar angeordnet ist.

7. Überziehmaschine (1) nach mindestens einem der Ansprüche 1 bis 6, **dadurch gekennzeichnet, dass** der Abnehmer (15) rotatorisch verschwenkbar angeordnet ist.

8. Überziehmaschine (1) nach mindestens einem der Ansprüche 1 bis 7, **dadurch gekennzeichnet, dass** der Wallformer (16) oberhalb des Abnehmers (15) angeordnet ist.

9. Überziehmaschine (1) mindestens einem der Ansprüche 1 bis 8, **dadurch gekennzeichnet, dass** der Wallformer (16) eine Abstützfläche (29) für das Gitterband (3) aufweist.

10. Überziehmaschine (1) nach mindestens einem der Ansprüche 1 bis 9, **dadurch gekennzeichnet, dass** die Tunkwalze (10) gleichsinnig zur Arbeitsrichtung (4) des Gitterbands (3) angetriebenen ist.

11. Überziehmaschine (1) nach mindestens einem der Ansprüche 1 bis 9, **dadurch gekennzeichnet, dass** die Tunkwalze (10) gegensinnig zur Arbeitsrichtung (4) des Gitterbands (3) angetriebenen ist.

12. Überziehmaschine (1) nach mindestens einem der Ansprüche 1 bis 11, **dadurch gekennzeichnet, dass** ein Vorabstreifer (14) vorgesehen ist, der in Arbeitsrichtung (4) gesehen vor dem Abnehmer (15) angeordnet ist.

13. Bodenwallstation (2) für Süßwarenstücke (5), die in ihrer Betriebsstellung unterhalb eines in einer Arbeitsrichtung (4) angetriebenen Gitterbands (3) für die Süßwarenstücke (5) anordenbar ist, mit
einem muldenartigen Kasten (6) zur Aufnahme flüssiger Überzugsmasse (7), insbesondere Schokolade,
einer als Förderorgan für die Überzugsmasse (7) dienenden angetriebenen Tunkwalze (10), die in der Betriebsstellung unterhalb des Gitterbands (3) angeordnet ist, und
einem am Umfang der Tunkwalze (10) unter Schleifkontakt angestellten Abnehmer (15) zur Abnahme der von der Tunkwalze (10) aus dem Kasten (6) geförderten Überzugsmasse (7) zur Bildung eines Bodenwalls, **gekennzeichnet durch**
einen zum Abnehmer (15) separaten Wallformer (16), der in der Betriebsstellung unterhalb des Gitterbands (3) angeordnet ist,
wobei der Wallformer (16) die vom Abnehmer (15) von der Tunkwalze (10) abgenommene Überzugsmasse (7) umleitet und umformt, so dass aus einem Teil des Bodenwalls nach dessen Durchtritt **durch** das Gitterband (3) eine Bodenwelle (22) entsteht, und
wobei der Wallformer (16) zur Beeinflussung des Querschnittsprofils (23) der Bodenwelle (22) eine mit der abgenommenen Überzugsmasse (7) in Kontakt kommende Formoberfläche (17) aufweist und relativ zum Abnehmer (15) austausch- und/oder einstellbar angeordnet ist.

14. Verwendung einer Bodenwallstation (2) nach Anspruch 13 in einer Maschine zum Verarbeiten von Süßwarenstücken (5) mit Ausnahme einer Überziehmaschine (1), insbesondere einer Dekoriermaschine, wobei das Gitterband (3) Teil der Maschine ist.

## Claims

1. A coating machine (1) for confectionaries (5), including
a grid belt (3) for the confectionaries (5), the grid belt (3) being driven in a working direction (4); and
a bottom coating station (2), including
a recess-shaped box (6) for containing liquid coating mass (7), especially chocolate,
a dipping roller (10) being located below the grid belt (3), the dipping roller (10) serving as a conveying element for the coating mass (7), and
a detaching element (15) for removing coating mass (7) being conveyed by the dipping roller (10) from the box (6) to form a bottom coating mass, the detaching element (15) being arranged at the circumference of the dipping roller (10) under sliding contact, **characterised in that**
a bottom coating mass forming element (16) being designed as a separate element in addition to the detaching element (15) is located below the grid belt (3), the bottom coating mass forming element (16) redirecting and deforming the coating mass (7) that has been removed from the dipping roller (10) by the detaching element (15) such that a bottom wave (22) is formed by a part of the bottom coating mass after its passage through the grid belt (3),
the bottom coating mass forming element (16) includes a form surface (17) getting in contact with the removed coating mass (7) to have an influence on the cross-sectional profile (23) of the bottom wave (22), and
the bottom coating mass forming element (16) is arranged to be replaceable and/or adjustable with respect to the detaching element (15) to have an influence on the cross-sectional profile (23) of the bottom wave (22).

2. The coating machine (1) of claim 1, **characterised in that** the form surface (17) of the bottom coating mass forming element (16) is designed such that it determines the entire cross-sectional profile (23) of the bottom wave (22) of the bottom coating mass extending through the grid belt (3) as seen in a vertical sectional view in the working direction (4), or that it at least determines the increasing section (24) of the bottom wave (22).

3. The coating machine (1) of claim 1or 2, **characterised in that** the form surface (17) is designed to be coordinated with the number of rotations and the diameter of the dipping roller (10).

4. The coating machine (1) of at least one of claims 1 to 3, **characterised in that** the form surface (17) of the bottom coating mass forming element (16) is designed to be inclined, bent or curved.

5. The coating machine (1) of at least one of claims 1 to 4, **characterised in that** the bottom coating mass forming element (16) is arranged to be adjustable in a translatory way in the working direction (4) parallel to the plane of the grid belt (3).

6. The coating machine (1) of at least one of claims 1 to 5, **characterised in that** the bottom coating mass forming element (16) is arranged to be pivotable in a rotary way about a rotational axis extending transverse with respect to the working direction (4).

7. The coating machine (1) of at least one of claims 1 to 6, **characterised in that** the detaching element (15) is arranged to be pivotable in a rotary way.

8. The coating machine (1) of at least one of claims 1 to 7, **characterised in that** the bottom coating mass forming element (16) is arranged above the detaching element (15).

9. The coating machine (1) of at least one of claims 1 to 8, **characterised in that** the bottom coating mass forming element (16) includes a supporting surface (29) for the grid belt (3).

10. The coating machine (1) of at least one of claims 1 to 9, **characterised in that** the dipping roller (10) is driven to rotate in the same direction as the working direction (4) of the grid belt (3).

11. The coating machine (1) of at least one of claims 1 to 9, **characterised in that** the dipping roller (10) is driven to rotate in direction opposite to the working direction (4) of the grid belt (3).

12. The coating machine (1) of at least one of claims 1 to 11, **characterised in that** there is a pre-stripper (14) being arranged upstream of the detaching element (15) as seen in the working direction (4).

13. A bottom coating station (2) for confectionaries (5), the bottom coating station (2) in its operational position being arrangeable below a grid belt (3) for the confectioneries (5), the grid belt being driven in a working direction (4), including
a recess-shaped box (6) for containing liquid coating mass (7), especially chocolate,
a dipping roller (10) serving as a conveying element for the coating mass (7), the dipping roller (10) in the operational position being located below the grid belt (3), and
a detaching element (15) for removing coating mass (7) being conveyed by the dipping roller (10) from the box (6) to form a bottom coating mass, the detaching element (15) being arranged at the circumference of the dipping roller (10) under sliding contact, **characterised by**
a bottom coating mass forming element (16) being designed as a separate element in addition to the detaching element (15), the bottom coating mass forming element (16) in the operational position being located below the grid belt (3),
the bottom coating mass forming element (16) redirecting and deforming the coating mass (7) that has been removed from the dipping roller (10) by the detaching element (15) such that a bottom wave (22) is formed by a part of the bottom coating mass after its passage through the grid belt (3),
the bottom coating mass forming element (16), to have an influence on the cross-sectional profile (23) of the bottom wave (22), including a form surface (17) getting in contact with the removed coating mass (7) and being arranged to be replaceable and/or adjustable with respect to the detaching element (15).

14. Use of a bottom coating machine (2) of claim 13 in a machine for processing confectioneries (5) with the exception of a coating machine (1), especially a decorating machine, the grid belt (3) being a part of the machine.

## Revendications

1. Machine d'enrobage (1) pour des pièces de confiserie (5), comportant
une bande à claire-voie (3), actionnée dans le sens de travail (4), pour les pièces de confiserie (5), et
un poste d'enrobage du fond (2), comportant
un caisson (6) du type cuve, destiné à recevoir le produit de couverture (7) liquide, en particulier du chocolat,
un cylindre d'immersion (10) actionné, qui fait fonction d'organe de transport pour le produit de couverture (7) et qui est agencé en dessous de la bande à claire-voie (3), et
un racloir (15), positionné sur la périphérie du cylindre d'enrobage (10) moyennant un contact par friction et destiné à détacher le produit de couverture (7), transporté par le cylindre d'enrobage (10) hors du caisson (6), pour former un rideau de fond, **caractérisée en ce que**
en dessous de la bande à claire-voie (3) est agencé un dispositif de formage du rideau (16), qui est séparé du racloir (15) et par lequel le produit de couverture (7), détaché du cylindre d'immersion (10) par le racloir (15), est dévié et transformé de telle sorte que, après le passage du rideau de fond à travers la bande à claire-voie (3), il se forme une vague de fond (22) à partir d'une partie du rideau de fond,
le dispositif de formage du rideau (16), pour influencer le profil (23) de la section de la vague de fond (22), comporte une surface profilée (17) qui vient en contact avec le produit de couverture (7) détaché, et
le dispositif de formage du rideau (16), pour influencer le profil (23) de la section de la vague de fond (22), est agencé de manière remplaçable et/ou réglable par rapport au racloir (15).

2. Machine d'enrobage (1) selon la revendication 1, **caractérisée en ce que** la surface profilée (17) du dispositif de formage du rideau (16) est configurée de telle sorte qu'au moyen de celle-ci la totalité du profil de section (23) de la vague de fond (22), laquelle s'étend à travers la bande à claire-voie (3), du rideau de fond formé par le produit de couverture (7) est déterminée dans le sens de travail (4) sur une coupe verticale ou au moins la pente (24) de cette vague de fond (22) est définie.

3. Machine d'enrobage (1) selon la revendication 1 ou 2, **caractérisée en ce que** la surface profilée (17) est configurée en concordance avec la vitesse de rotation et le diamètre du cylindre d'immersion (10).

4. Machine d'enrobage (1) selon au moins l'une quelconque des revendications 1 à 3, **caractérisée en ce que** la surface profilée (17) du dispositif de formage du rideau (16) est inclinée, coudée ou courbée.

5. Machine d'enrobage (1) selon au moins l'une quelconque des revendications 1 à 4, **caractérisée en ce que** le dispositif de formage du rideau (16) est agencé parallèlement au plan de la bande à claire-voie (3) de manière réglable en translation dans le sens de travail (4).

6. Machine d'enrobage (1) selon au moins l'une quelconque des revendications 1 à 5, **caractérisée en ce que** le dispositif de formage du rideau (16) est agencé de manière à pouvoir pivoter en rotation autour d'un axe de rotation orienté transversalement au sens de travail (4).

7. Machine d'enrobage (1) selon au moins l'une quelconque des revendications 1 à 6, **caractérisée en ce que** le racloir (15) est agencé de manière à pouvoir pivoter en rotation.

8. Machine d'enrobage (1) selon au moins l'une quelconque des revendications 1 à 7, **caractérisée en ce que** le dispositif de formage du rideau (16) est disposé au-dessus du racloir (15).

9. Machine d'enrobage (1) selon au moins l'une quelconque des revendications 1 à 8, **caractérisée en ce que** le dispositif de formage du rideau (16) comporte une surface d'appui (29) pour la bande à claire-voie (3).

10. Machine d'enrobage (1) selon au moins l'une quelconque des revendications 1 à 9, **caractérisée en ce que** le cylindre d'immersion (10) est actionné dans le même sens que le sens de travail (4) de la bande à claire-voie (3).

11. Machine d'enrobage (1) selon au moins l'une quelconque des revendications 1 à 9, **caractérisée en ce que** le cylindre d'immersion (10) est actionné dans le sens opposé au sens de travail (4) de la bande à claire-voie (3).

12. Machine d'enrobage (1) selon au moins l'une quelconque des revendications 1 à 11, **caractérisée en ce qu'**il est prévu un racloir préliminaire (14) qui, par référence au sens de travail (4), est agencé, en amont du racloir (15).

13. Poste d'enrobage du fond (2) pour des pièces de confiserie (5), qui, dans sa position de service, peut être monté en dessous d'une bande à claire-voie (3) pour pièces de confiserie (5), actionnée dans un sens de travail (4), comportant
un caisson (6) du type cuve, destiné à recevoir le produit de couverture (7) liquide, en particulier du chocolat,
un cylindre d'immersion (10) actionné, qui fait fonction d'organe de transport pour le produit de couverture (7) et qui est agencé en dessous de la bande à claire-voie (3), et
un racloir (15), positionné sur la périphérie du cylindre d'enrobage (10) moyennant un contact par friction et destiné à détacher le produit de couverture (7), transporté par le cylindre d'enrobage (10) hors du caisson (6), pour former un rideau de fond, **caractérisé par**
un dispositif de formage du rideau (16), qui est séparé du racloir (15) et qui, dans la position de service, est monté en dessous de la bande à claire-voie (3),
sachant que le produit de couverture (7), détaché du cylindre d'immersion (10) par le racloir (15), est dévié et transformé par le dispositif de formage du rideau (16) de telle sorte que, après le passage du rideau de fond à travers la bande à claire-voie (3), il se forme .une vague de fond (22) à partir d'une partie du rideau de fond,
le dispositif de formage du rideau (16), pour influencer le profil (23) de la section de la vague de fond (22), comportant une surface profilée (17) qui vient en contact avec le produit de couverture (7) détaché, et étant agencé de manière remplaçable et/ou réglable par rapport au racloir (15).

14. Utilisation d'un poste d'enrobage du fond (2) selon la revendication 13 dans une machine pour le traitement de pièces de confiserie (5), à l'exception d'une machine d'enrobage (1), en particulier une machine à décorer, la bande à claire-voie (3) faisant partie de la machine.
